Europäisches Patentamt

European Patent Office

Office européen des brevets

(19)

(11) Numéro de publication: **0 390 679**

**A2**

(12) **DEMANDE DE BREVET EUROPEEN**

(21) Numéro de dépôt: **90400843.0**

(22) Date de dépôt: **28.03.90**

(51) Int. Cl.5: **C04B 38/06, B28B 1/02, F27D 5/00**

(30) Priorité: **28.03.89 FR 8904002**

(43) Date de publication de la demande:
**03.10.90 Bulletin 90/40**

(84) Etats contractants désignés:
**DE ES FR GB IT NL SE**

(71) Demandeur: **CERAPLAST**
**Pépinière 87, 16 Place Jourdan**
**F-87000 Limoges(FR)**

(72) Inventeur: **Burelle, Pierre**
**11 bis route de la Cascade**
**F-78110 Le Vesinet(FR)**
Inventeur: **Coudamy, Jacques**
**125 rue François Perrin**
**F-87000 Limoges(FR)**
Inventeur: **Coudamy, Gérard**
**97 route de Naugeat**
**F-87000 Limoges(FR)**
Inventeur: **Gory, Jacques**
**Le Chassaing**
**F-19130 Lascaux(FR)**
Inventeur: **Gaillard, Jean-Marie**
**29 ter rue 19 mars 1962**
**F-87000 Limoges(FR)**

(74) Mandataire: **Moncheny, Michel et al**
**c/o Cabinet Lavoix 2 Place d'Estienne**
**d'Orves**
**F-75441 Paris Cedex 09(FR)**

(54) **Procédé et dispositif de fabrication notamment d'un support d'enfournement en mousse céramique et support obtenu.**

(57) Procédé de fabrication d'un support d'enfournement, en mousse céramique notamment pour la cuisson d'assiette, comportant au moins un cycle d'imprégnation avec une barbotine d'une préforme en matériau polymère à porosité ouverte ayant sensiblement le profil du support, suivi d'un séchage puis d'un frittage à haute température avec élimination du polymère caractérisé en ce que la préforme imprégnée subit un essorage de la barbotine par pressage différentiel de façon à faire varier la porosité en continu le long du profil et à obtenir la résistance mécanique nécessaire dans les zones sensibles telles que les cerces. Dispositif associé pour la mise en oeuvre du procédé comprenant deux rouleaux (22, 24) de pressage de la mousse polymère (20) imprégnée.

EP 0 390 679 A2

FIG.2

La présente invention a pour objet un procédé et un dispositif pour la fabrication d'un support d'enfournement en matériau réfractaire alvéolaire pour la cuisson de produits céramiques.

La fabrication de produits céramiques tels que des assiettes en porcelaine nécessite des supports d'enfournement ou "gazettes" sur lesquels sont disposés les produits crus, ces supports chargés étant ensuite placés dans un four à haute température de façon à cuire l'assiette.

Durant la cuisson le support d'enfournement et le produit qu'il supporte sont tous les deux portés de la température ambiante à des températures élevées supérieures à 1 000° C, il est donc nécessaire que la puissance du four puisse permettre de porter à cette température non seulement le produit à cuire mais également son support. Il y a donc une dépense calorifique inutile très importante d'autant plus que le cycle se poursuit par un refroidissement à la température ambiante de l'ensemble produit cuit et support sans récupération. Pour ces fabrications il est donc recherché des supports présentant une inertie thermique plus faible et également un meilleur coefficient de transmission de la chaleur.

En effet, le produit cru disposé sur le support d'enfournement doit être porté en température de façon régulière et la plus homogène possible sur toutes ses faces. Il est donc nécessaire que le support permette une bonne transmission de la chaleur afin d'obtenir l'homogénéité en température recherchée.

Un autre paramètre à prendre en compte est celui du poids du produit céramique à cuire car le support d'enfournement doit avoir une résistance mécanique suffisante pour ne présenter aucune déformation sous charge en température.

On connaît un type de produit réfractaire alvéolaire pouvant servir de support aux produits céramiques lors de leur cuisson dans un four qui présente une faible masse volumique, il s'agit des mousses céramiques. Ces mousses sont fabriquées à partir d'une mousse polymère à porosité ouverte généralement ayant une structure réticulée à trois dimensions, que l'on imprègne d'une suspension céramique. L'excès de suspension est ensuite enlevé puis la mousse polymère chargée est alors séchée. Les opérations d'imprégnation et de séchage peuvent être effectuées en plusieurs cycles successifs jusqu'à obtenir le taux d'imprégnation souhaité. L'ensemble est ensuite porté à une température de l'ordre de 1 500° C, c'est-à-dire à la température de cuisson de la suspension céramique utilisée.

Durant cette cuisson la matière organique est totalement décomposée et les fines particules de céramique divisées sont alors liées entre elles lors de la cuisson pour former une structure poreuse.

On connaît ainsi le brevet US N° 4 568 595 concernant une structure céramique constituée d'une partie en céramique réticulée poreuse dont la distribution de pores est comprise entre 2 et 50 pores par centimètre linéaire.

Les matériaux céramiques utilisés sont généralement la mullite et la zircone car elles ont de plus d'excellentes propriétés de résistance aux chocs thermiques.

Les différentes mousses céramiques obtenues ont des caractéristiques telles que la masse volumique apparente varie entre 0,4 et 2, la résistance à la compression varie de 5 à 10 MPa et la résistance à la flexion est comprise entre 1 et 3,5 MPa. Le taux de pores est compris entre 80 et 90% pour des diamètres de pores compris entre 0,5 à 4 millimètres.

Les supports d'enfournement en produit réfractaire alvéolaire qui utilisent ces mousses céramiques ont donc une inertie thermique relativement faible ainsi qu'un bon coefficient de transmission de la chaleur. Néanmoins, un tel support d'enfournement n'est pas optimisé dans le sens où il présente des densité apparente, densité de pores, résistance mécanique et coefficient de transmission de la chaleur uniformes. Or de tels supports d'enfournement sont soumis à des contraintes mécaniques importantes dans certaines zones particulières tels que les cerces, par exemple, puisque lors de leur utilisation ces supports d'enfournement sont superposés les uns sur les autres, tandis que d'autres, la partie centrale par exemple, ne doivent supporter que le poids du produit ce qui requiert une certaine résistance à la flexion mais qu n'est pas comparable à la résistance à la compression nécessaire d'un empilage. Il en est de même pour le coefficient de transmission de la chaleur car il importe qu'au niveau du produit à cuire le support présente le meilleur coefficient possible.

Par contre, le support est soumis à des contraintes thermiques importantes et les variations au sein même du support d'enfournement doivent être parfaitement progressives afin de ne pas induire de zones de concentrations de contraintes mécaniques dépassant la résistance à la rupture du matériau.

Le but de la présente invention est de proposer un procédé et un dispositif de fabrication de supports d'enfournement à porosité variable le long du profil du support de façon à adapter les différents paramètres physiques du support tels que résistance mécanique, coefficient de transmission de la chaleur au produit à cuire, ce qui diminue d'autant l'inertie thermique du support d'où une meilleure homogénéité lors de la cuisson ainsi qu'une plus faible consommation d'énergie.

A cet effet, le procédé de fabrication selon l'invention d'un support d'enfournement en mousse céramique notamment pour la cuisson d'assiettes en porcelaine, comporte au moins un cycle d'imprégnation avec une barbotine d'une préforme en matériau polymère à porosité ouverte ayant sensiblement le profil du support, suivie d'un séchage puis d'un frittage à haute température avec élimination du polymère et se caractérise en ce que la préforme imprégnée subit un essorage de la barbotine par pressage différentiel de façon à faire varier la porosité en continu le long du profil et à diminuer la résistance mécanique dans les zones faiblement sollicitées.

Ce procédé se caractérise également en ce que le pressage différentiel est inversement proportionnel à la résistance mécanique recherchée.

Selon une autre caractéristique du procédé, la préforme est essorée par pressage entre deux rouleaux mobiles ayant des sens de rotation opposés de façon à entraîner simultanément la préforme imprégnée.

Selon une caractéristique particulière la préforme est sensiblement un disque dont le bord extérieur est recourbé vers le bas pour constituer un pied, la porosité diminuant du centre vers l'extérieur.

Le dispositif pour la mise en oeuvre du procédé se caractérise essentiellement en ce qu'il comprend des moyens de pressage de la préforme sur au moins l'une de ses faces.

Selon une caractéristique particulière les moyens de pressage comprennent deux rouleaux contra-rotatifs à profil sensiblement identique à ceux de la préforme.

L'invention va maintenant être décrite en détail selon un mode de réalisation particulier et en regard des dessins annexés sur lesquels :

- la figure 1 représente un empilement de supports d'enfournement sur lesquels sont disposées les assiettes,

- la figure 2 représente une réalisation schématique de moyens de pressage à deux rouleaux contra-rotatifs, et

- la figure 3 représente la courbe de la résistance en MPa/cm$^2$ de la mousse céramique obtenue en fonction de la densité en g/cm$^3$.

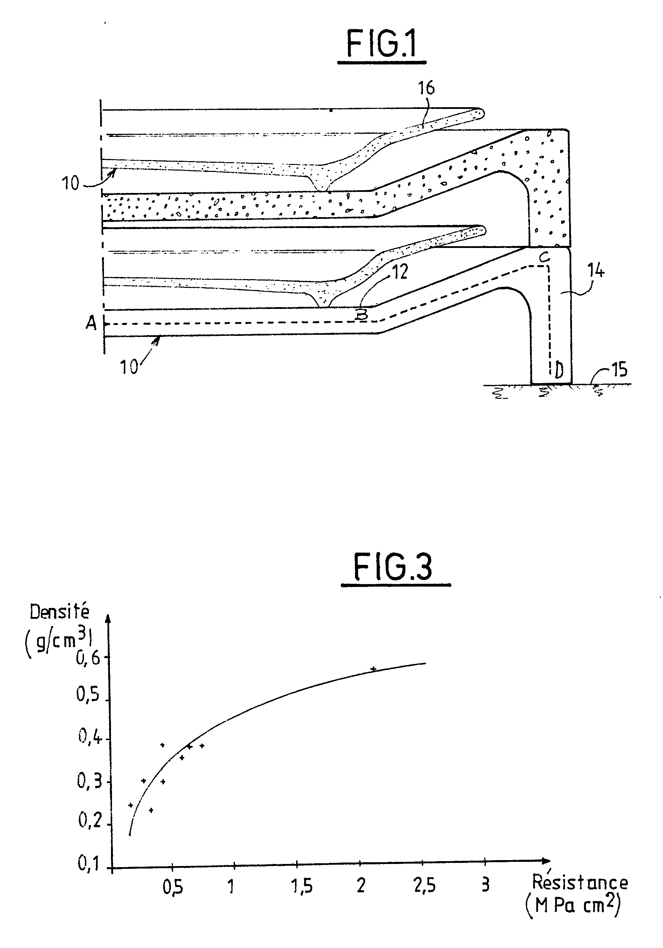

Sur la figure 1 on a représenté des supports d'enfournement 10 de profil connu sous forme de disque dont la partie centrale 12 est légèrement en creux et dont le bord extérieur est replié vers le bas afin de former une cerce 14. Ces supports sont empilés les uns sur les autres sur la sole 15 d'un four et portent des assiettes. Dans ce type de support d'enfournement on peut distinguer grossièrement trois zones de résistance mécanique, à savoir la zone AB faiblement sollicitée, la zone BC moyennement sollicitée et la zone CD fortement sollicitée.

En effet, la zone AB est soumise à son propre poids ainsi qu'à une partie de celui de l'assiette qu'elle supporte, la zone BC est soumise à son propre poids, au poids de la zone AB ainsi qu'à la plus grosse partie du poids de l'assiette, et la zone CD est soumise à de fortes contraintes de compression dues à l'empilement des supports chargés les uns sur les autres.

Ainsi compte tenu des efforts répartis le long du profil AD il est possible de déterminer par le calcul les variations de résistance mécanique nécessaires le long du profil afin d'optimiser celui-ci par variation de la densité apparente.

Ainsi la densité pourrait varier de 0,2 au point A à 1 dans le pied au point D, en passant par des valeurs moyennes de 0,4 au point B et 1 au point C, ces variations étant continues dans les zones où il y a variation.

Le mode opératoire pour la fabrication de ces supports d'enfournement consiste à découper une préforme en mousse polymère du type mousse d'uréthane dont les dimensions sont égales à celles du produit souhaité augmenté du pourcentage de ces dimensions correspondant au retrait de la composition de la barbotine d'imprégnation qui est utilisée.

La dimension moyenne des pores de la mousse utilisée est de 0,5 à 4 mm et la densité de pores est de l'ordre de 4 par cm. La mousse d'uréthane utilisée se consumant entièrement vers 350°.

La barbotine utilisée pour les essais est une composition silico-alumineuse dont les pourcentages de composants varient de 15 à 20 % pour la SiO$_2$, de 78 à 84 % pour Al$_2$O$_3$, de 0,2 à 0,3 % pour K$_2$O.

Cette poudre céramique est mise en suspension dans l'eau et afin d'obtenir une bonne défloculation on utilise par exemple un défloculant connu du type de celui vendu dans le commerce sous la dénomination "DARVAN 7". De plus, afin d'augmenter la viscosité de la barbotine, il est possible d'utiliser un liant et dans l'essai mené avec la composition précitée il est ajouté 0,5 à 1 % d'alcool polyvinylique.

La préforme en mousse d'uréthane est trempée dans la barbotine préparée pendant 30 secondes puis essorée avec une pression d'essorage variable entre 0,08 MPa/cm$^2$ et 0,43 MPa/cm$^2$, séchée à 100° C durant une heure environ, durée qui est fonction des dimensions du support, dégourdie à 1 250° C avec élimination de la mousse d'uréthane vers 300° environ, puis frittée à 1 540° C avec un palier d'une heure environ à cette température.

Après refroidissement les différents échantillons qui ont subi des pressions variables et qui ont donc des densités apparentes variables sont testés à la flexion et les résultats sont regroupés dans le tableau ci-dessous.

La courbe correspondant ce tableau est représentée à la figure 3. On constate qu'il est donc possible de relier la résistance et la densité apparente, donc la résistance en fonction de la pression.

| Numéro Echantillon | Pression MPa/cm$^2$ | Densité Apparente g/cm3 | Résistance MPa/cm$^2$ |
|---|---|---|---|
| 1 | 0,22 | 0,38 | 0,70 |
| 2 | 0,37 | 0,38 | 0,75 |
| 3 | 0,43 | 0,31 | 0,42 |
| 4 | 0,08 | 0,55 | 2,16 |
| 5 | 0,16 | 0,39 | 0,46 |
| 6 | 0,32 | 0,31 | 0,37 |
| 7 | 0,20 | 0,37 | 0,62 |
| 8 | 0,28 | 0,26 | 0,22 |
| 9 | 0,28 | 0,24 | 0,34 |

Des programmes de calcul connus permettent pour une charge donnée de déduire la résistance nécessaire en tout point du profil du support , il est alors possible de corréler la résistance recherchée avec la pression à exercer lors de l'essorage.

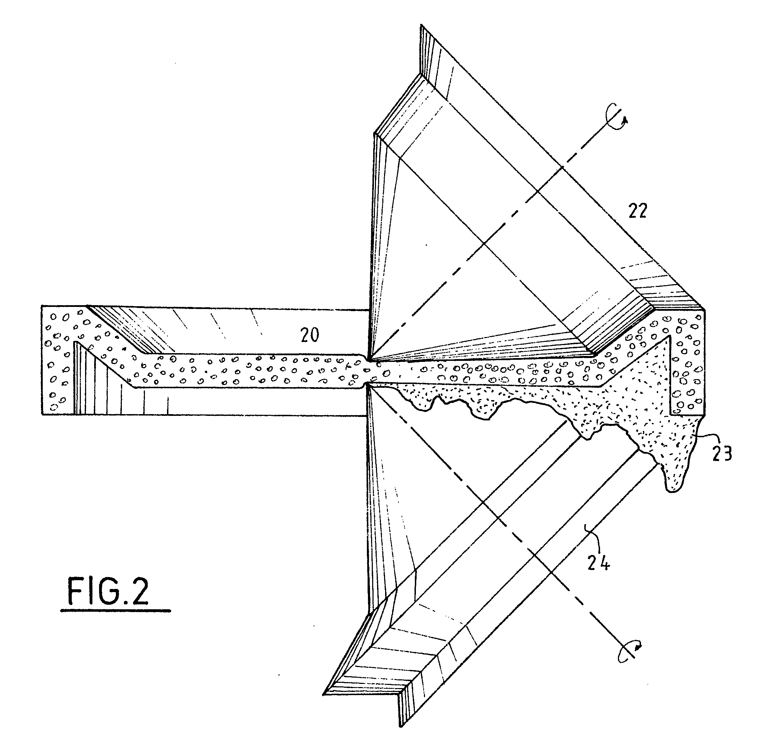

A la figure 2 on a représenté un dispositif de pressage selon l'invention dans lequel une préforme 20 est entraînée entre deux rouleaux supérieur 22 et inférieur 24 dont les axes de rotation sont obliques par rapport au plan de la préforme et dont le profil est sensiblement un cône, la surface des rouleaux ayant sensiblement le profil de la préforme. La barbotine 23 exprimée de la mousse s'écoule par gravité. Par ailleurs, ces rouleaux comprennent des moyens de réglage connus (non figurés) destinés à diminuer l'espace entre les deux rouleaux. De plus, le profil extérieur des rouleaux est adapté de façon que, la préforme ayant une épaisseur constante, la distance entre les rouleaux varie afin d'exercer un effort de pressage supérieur dans les endroits de résistance mécanique plus faible.

De façon à pouvoir entraîner la préforme, dans l'exemple proposé un disque, entre les deux rouleaux, ceux-ci ont des sens de rotation contraires et les axes de rotation des rouleaux passent sensiblement par le centre du disque.

L'invention n'est pas limitée à la seule application aux supports d'enfournement ou "gazettes" mais au contraire comprend tous les produits susceptibles d'être fabriqués selon le procédé.

En ce qui concerne le traitement des préformes elles-mêmes, il est possible de les imprégner en les disposant dans des moules de forme complémentaire à l'intérieur desquels on injecte de la barbotine jusqu'à saturation. Dans ce cas, la mousse doit être à porosité ouverte et la présence d'une peau serait préjudiciable à une bonne imprégnation. Une solution pour éviter la constitution d'une peau lors de la fabrication de la préforme dans son moule consiste à revêtir la surface interne du moule de fabrication d'un matériau anti-adhérent tel que du polytetrafluoroéthylène. Ainsi, les canaux de la préforme en mousse sont débouchants à la surface et laissent passer la barbotine vers l'intérieur de la préforme.

dans un autre mode de réalisation, il est prévu d'utiliser un moule unique pour la fabrication de la préforme et pour son imprégnation.

## Revendications

1. Procédé de fabrication notamment d'un support d'enfournement sur cerces, en mousse céramique notamment pour la cuisson d'assiettes en porcelaine, comportant au moins un cycle d'imprégnation avec une barbotine d'une préforme en matériau polymère à porosité ouverte ayant sensiblement le profil du support, suivi d'un séchage puis d'un frittage à haute température avec élimination du polymère caractérisé en ce que la préforme imprégnée subit un essorage de la barbotine par pressage différentiel de façon à faire varier la porosité en continu le long du profil et à diminuer la résistance mécanique nécessaire dans

EP 0 390 679 A2

les zones faiblement sollicitées.

2 Procédé selon la revendication 1 caractérisé en ce que le pressage différentiel est inversement proportionnel à la résistance mécanique recherchée.

3. Procédé selon la revendication 1 ou 2 caractérisé en ce que la préforme est essorée par pressage entre deux rouleaux mobiles.

4. Procédé selon la revendication 3 caractérisé en ce que les rouleaux sont contra-rotatifs et entraînent la préforme imprégnée.

5. Procédé selon l'une des revendications 3 ou 4 caractérisé en ce que l'espace entre les rouleaux est diminué dans les zones de faible résistance mécanique.

6. Procédé selon l'une quelconque des revendications précédentes, caractérisé en ce que la préforme a sensiblement le profil d'un disque dont le bord extérieur est recourbé vers le bas pour constituer le cerce, dont la partie centrale est en creux.

7. Procédé selon l'une quelconque des revendications précédentes caractérisé en ce que la préforme a les dimensions du support d'enfournement cuit augmentées du pourcentage de retrait.

8. Procédé selon l'une quelconque des revendications précédentes, caractérisé en ce que la porosité diminue en continu du centre vers l'extérieur du support.

9. Procédé selon l'une quelconque des revendications précédentes caractérisé en ce que la préforme en mousse est obtenue dans un moule recouvert intérieurement d'un matériau anti-adhérent de façon à obtenir une surface poreuse.

10. Dispositif pour la mise en oeuvre du procédé selon l'une quelconque des revendications 1 à 9, caractérisé en ce qu'il comprend des moyens de pressage de la préforme (20) sur au moins une des deux faces.

11. Dispositif selon la revendication 10 caractérisé en ce qu'il comprend deux rouleaux (22, 24) contra-rotatifs à axe oblique dont le profil extérieur est sensiblement identique à celui de la préforme.

12. Dispositif selon l'une des revendications 10 ou 11, caractérisé en ce que l'espace entre les rouleaux est variable.

13. Support d'enfournement caractérisé en ce que sa densité apparente varie de 0,1 à 1 du centre vers l'extérieur.

14. Support d'enfournement selon la revendication 13 caractérisé en ce que sa composition varie entre 15 et 20 % de $SiO_2$, 78 et 84 % d'$Al_2O_3$, 0,1 à 0,3 % de $K_2O$.

6

## FIG.1

## FIG.3

FIG.2